# EUROPEAN PATENT APPLICATION

(11) **EP 1 768 065 A1**
(43) Date of publication of application: **28.03.2007**
(21) Application number: 06019681.3
(22) Date of filing: 20.09.2006
(51) Int. Cl.: G06T 7/00, G02B 21/36

(54) **Multipoint time-lapse imaging with irradiation dose control**

(30) Priority: 21.09.2005 JP 2005274331; 31.07.2006 JP 2006208875
(71) Applicant: Olympus Corporation, Tokyo 151-0072 (JP)
(72) Inventor: Hasegawa, Kazuhiro, Hachioji-shi Tokyo 192-0914 (JP); Tsuchiya, Atsuhiro, Hachioji-shi Tokyo 192-0031 (JP); Endo, Hideaki, Hino-shi Tokyo 191-0003 (JP); Kagayama, Akitsugu, Hachioji-shi Tokyo 192-0911 (JP)
(74) Representative: von Hellfeld, Axel

(57) **Abstract**

An observation apparatus includes an illuminating unit (13, 15, 22 to 24, 31 to 34) that illuminates a sample (S); an imaging unit (18) that captures an image of the sample (S) to generate an observation image; a storage unit (58) that stores the observation image in association with an illumination condition of the illuminating unit (13, 15, 22 to 24, 31 to 34) at generation of the observation image by the imaging unit (18); an imaging controller (51) that controls the imaging unit (18) to capture the image of the sample (S) to generate the observation image and stores the observation image in the storage unit (58); and an illumination controller (52) that controls the illuminating unit (13, 15, 22 to 24, 31 to 34) to illuminate the sample (S), and stores the illumination condition in the storage unit (58) every time the imaging unit (18) captures the image of the sample (S).

## Description

### TECHNICAL FIELD

The present invention relates to an observation apparatus that captures an image of a sample for observation.

### BACKGROUND ART

One conventional technique of microscopy of a sample, such as a living cell, includes capturing an image of the sample at time intervals (hereinafter such a manner of image-taking will be referred to as time-lapse imaging) to generate an observation image; reproducing a series of observation images after the time-lapse imaging is finished; and observing a moving picture to check a morphological change in the sample over time. Such a conventional technique is considered to be highly effective for an observation of temporal change in the sample.

In recent years, the time-lapse imaging is sometimes performed at plural imaging positions, for example, when living cells cultured under the same condition are tested with plural types of agents for confirmation of the effect of the agents, or when temporal changes of different cells are observed under the same environment.

When the time-lapse imaging is performed at plural imaging positions (this manner of image-taking will be hereinafter referred to as multipoint time-lapse imaging), the plural imaging positions are not always located in a viewing field of one microscope. Even if the imaging positions reside on one particular living cell under the observation, one or more imaging positions are often located outside the viewing field of the microscope. In addition, plural imaging positions often reside respectively on different living cells.

One conventional imaging technique to accommodate the inconveniences described above is described in Japanese Patent Application Laid-Open (JP-A) No. 2002-277754 (KOKAI). A structure and a method described in JP-A No. 2002-277754 (KOKAI) allow for the multipoint time-lapse imaging. The described method includes steps of placing a sample containing living cells on a stage whose positioning is electrically controllable along X, Y, and Z axes, and previously setting positional coordinates of plural imaging positions, exposure of an imaging element at the imaging positions, a time interval of the time-lapse imaging for each imaging position, and a number of images to be captured.

The sample is illuminated by illumination light during the time-lapse imaging. The irradiation of the illumination light causes discoloration and damage of the sample. Hence, it is desirable that information on the irradiation of the illumination light be available to an operator when the operator evaluates the observation image after the time-lapse imaging is finished, in other words, it is desirable that the operator can know an accumulated amount of light irradiation on the sample of the time-lapse imaging. In other words, it is desirable to provide the information on illumination condition together with the time-lapse observation image.

### DISCLOSURE OF INVENTION

An observation apparatus according to one aspect of the present invention includes an illuminating unit that illuminates a sample; an imaging unit that captures an image of the sample to generate an observation image; a storage unit that stores the observation image in association with an illumination condition of the illuminating unit at generation of the observation image by the imaging unit; an imaging controller that controls the imaging unit to capture the image of the sample to generate the observation image and stores the observation image in the storage unit; and an illumination controller that controls the illuminating unit to illuminate the sample, and stores the illumination condition in the storage unit every time the imaging unit captures the image of the sample.

The above and other objects, features, advantages and technical and industrial significance of this invention will be better understood by reading the following detailed description of presently preferred embodiments of the invention, when considered in connection with the accompanying drawings.

### BRIEF DESCRIPTION OF DRAWINGS

FIG. 1 is an observation apparatus according to an embodiment of the present invention;
FIG. 2 shows imaging areas which are located within an imageable area and from which observation images are captured according to the embodiment of the present invention;
FIG. 3 shows information stored in an imaging information database shown in FIG. 1;
FIG. 4 schematically shows how the time-lapse imaging is performed according to the embodiment of the present invention;
FIG. 5 shows time-lapse images divided into blocks according to a coordinate table, in which an accumulated amount of illumination light is indicated by brightness on block to block basis;
FIG. 6 is a graph of illumination condition of a block within the coordinate table shown along a time axis;
FIG. 7 shows a dynamic picture generated from time-lapse images together with a graph of an accumulated amount of illumination light against elapsed time;
FIG. 8 shows time-lapse images and observation images for which the accumulated amount of illumination light is small;
FIG. 9 shows an example of an aligned display of the time-lapse image and the observation image for which the accumulated amount of illumination light is small; and
FIG. 10 shows an observation image on which illumination condition stored in the imaging information database is superposed as textual information.

### BEST MODE(S) FOR CARRYING OUT THE INVENTION

Exemplary embodiments of the present invention will be described below with reference to the accompanying drawings.

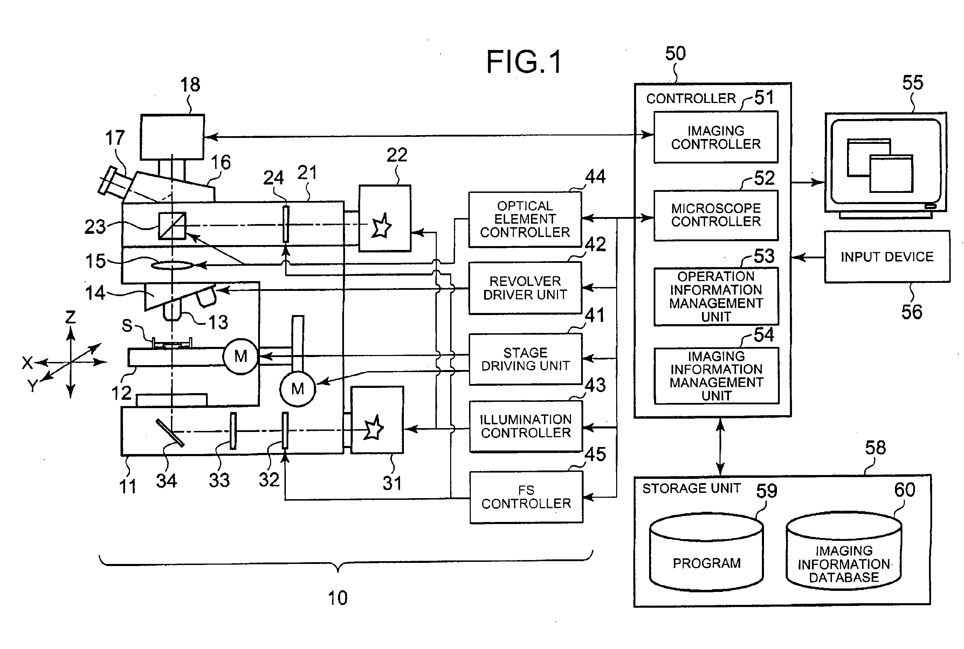

FIG. 1 schematically shows an observation apparatus according to an embodiment of the present invention.

The observation apparatus includes a microscope 10 for observation of a sample such as a living cell. The microscope 10 includes a microscope body 11, an intermediate lens barrel 21 arranged over the microscope body 11, and an eyepiece lens barrel 16 arranged on the intermediate lens barrel 21.

The microscope body 11 has an electromotive stage 12 which is movable in a three-dimensional direction (XYZ directions), and a revolver 14 which can hold plural objective lenses 13. Generally, the objective lenses 13 with different magnifications are attached to the revolver 14, and one of the attached objective lenses 13 is arranged on an optical path of the microscope 10. A sample S is placed on the electromotive stage 12. The sample S contains plural living cells that rest in a lower portion of a transparent container filled with culture solution, for example. The electromotive stage 12 has plural built-in motors M, and is capable of moving the sample S placed thereon in a three-dimensional manner relative to the objective lens 13.

A transmitting illumination light source 31 is attached to the microscope body 11. The microscope body 11 has a field shutter (FS) 32, a neutral density (ND) filter 33, and a mirror 34. The transmitting illumination light source 31, the field shutter 32, the ND filter 33, and the mirror 34 together form a transmitting illumination optical system which serves to illuminate the sample S from below.

An incident-light illumination light source 22 is attached to the intermediate lens barrel 21. The intermediate lens barrel 21 has a field shutter 24. Further, necessary optical elements are arranged inside the intermediate lens barrel 21 as appropriate for various types of microscope observations, such as polarization, phase difference, Nomarski, and fluorescent microscope observations. Such optical elements are, for example, various filters and polarizing element, and denoted collectively by reference character 23. Further, a variable power lens 15 is arranged as appropriate inside the microscope body 11 so that an observation magnification can be easily changed. The incident-light illumination light source 22, the optical element 23, the variable power lens 15, and the objective lens 13 together form an incident-light illumination optical system that serves to illuminate the sample S from above.

To the eyepiece lens barrel 16, an eyepiece 17 which allows an observation of the sample S with a naked eye, and an imaging unit 18 which serves to capture the image of the sample S and to generate an observation image are attached. The imaging unit 18 may include a charge coupled device (CCD), for example, though not limited thereto. The imaging unit 18 captures the image of the sample S through an observation optical system that includes the objective lens 13 and the variable power lens 15. In other words, the imaging unit 18 captures the image of the sample S by capturing an observation image formed by the observation optical system for the sample S.

The microscope further includes a stage driver 41, a revolver driver 42, an illumination controller 43, an optical element controller 44, and an FS controller 45.

The stage driver 41 drives the electromotive stage 12 in a horizontal direction (XY direction drive) and in a vertical direction (Z direction drive) in order to change an area position of an imaging area of the sample S relative to the imaging unit 18. Here, the term "area position" means a position of the imaging area as indicated by XYZ coordinate system and located by the electromotive stage 12.

The revolver driver 42 rotates the revolver 14 to arrange the objective lens 13 of a desired magnification on the optical path. Thus, the revolver driver 42 and the revolver 14 function as a power changing mechanism that changes an observation magnification adopted by the observation optical system to form the observation image.

The illumination controller 43 serves to control various types of lighting necessary for the imaging. For example, the illumination controller 43 turns on and turns off the incident-light illumination light source 22 that illuminates the sample S from above and the transmitting illumination light source 31 that illuminates the sample S from below, while adjusting the amount of light of the light sources 22 and 31.

The optical element controller 44 arranges the optical element 23 on the optical path, retracts the optical element 23 from the optical path, and exchanges the variable power lens 15. The function of exchanging the power variable lens 15 allows the optical element controller 44 to function as a power changing mechanism that changes the observation magnification of the observation image similarly to the revolver driver 42 and the revolver 14.

The FS controller 45 controls the field shutters 24 and 32 so that the transmitting illumination optical system and the incident-light illumination optical system illuminate only an imaging region set for the imaging by the imaging unit 18.

The observation apparatus further includes a control unit 50, a monitor 55 that displays an image of a living cell and various pieces of information, an input device 56, and a storage unit 58 that stores the observation image, the XY coordinates of the electromotive stage 12, imaging conditions (including the illumination condition), and the like. The control unit 50 includes an imaging controller 51, a microscope controller 52, an operation information management unit 53, and an imaging information management unit 54. The imaging controller 51 serves as an imaging controller. The microscope controller 52 serves as an illumination controller, a movement controller, and a power change controller. The imaging information management unit 54 serves as a display controller.

The control unit 50 includes a central processing unit (CPU), a random access memory (RAM), and the like. The input device 56 includes, for example, a pointing device such as a mouse, and a keyboard. The storage unit 58 is, for example, a hard disk. The storage unit 58 stores a program 59 and an imaging information database 60. The program 59 includes, for example, a program for operating the CPU as the imaging controller 51, the microscope controller 52, the operation information management unit 53, and the imaging information management unit 54, and a program for controlling the imaging unit 18, the imaging controller 51, and the microscope controller 52 to perform a time-lapse imaging of a previously designated section. The program used here operates based on Microsoft Windows® as basic software, for example, and various commands are given via the input device 56.

The microscope controller 52 controls the stage driver 41, the revolver driver 42, the illumination controller 43, the optical element controller 44, and the FS controller 45, and makes these units perform necessary operations for the imaging. The imaging controller 51 performs various controls of the imaging unit 18 according to a previously set imaging condition. Specifically, the imaging controller 51 performs a control to make the imaging unit 18 capture an image of the sample S to generate the observation image, and to store the observation image in the imaging information database 60 inside the storage unit 58. Here, the previously set imaging condition is a condition related with a time of exposure, gain, or the like, and is appropriately set and changed for each sample S.

The operation information management unit 53 cooperates with the monitor 55 and the input device 56, and configures various graphical user interfaces (GUI). The GUI is, for example, a GUI for giving a command to the imaging unit 18 to capture an image of the sample S, a GUI for setting an area position as a target of the time-lapse imaging, a GUI for providing information corresponding to the observation image generated by the imaging unit 18.

The microscope controller 52 performs a control based on a command input from the input device 56 via the GUI displayed on the monitor 55 by the operation information management unit 53. The microscope controller 52 controls the stage driver 41 and the electromotive stage 12 to shift the imaging area in XY direction and Z direction, and controls the revolver driver 42, the illumination controller 43, the optical element controller 44, and the FS controller 45 for illumination, for example.

The electromotive stage 12 has a mechanical origin for each of the X, Y, and Z directions. The microscope controller 52 internally manages a shift amount instructed to the stage driver 41 based on the mechanical origins. Hence, the microscope controller 52 can recognize a current positional coordinate of the electromotive stage 12. In other words, the microscope controller 52 has a function of detecting the position of the electromotive stage 12 relative to the optical axis of the objective lens 13, and outputs the current positional coordinates (X, Y, Z) of the electromotive stage 12 as a current position of an imaging area. As an alternative structure, a separate position detector may be provided for detecting the current position of the electromotive stage 12. Then, the position detector may directly recognize the positional coordinates of the electromotive stage 12.

A procedure of observation using the observation apparatus according to the embodiment will be described below.

First, the sample S including the living cell is placed on the electromotive stage 12. Then, the electromotive stage 12 moves the sample S so as to shift the imaging area within the XY plane relative to the imaging unit 18 until a target living cell is located, in order to select an appropriate cell as the observation target. The electromotive stage 12 shifts the imaging area within an imageable region (region of 10 mm × 10 mm, for example) of the sample S by moving the sample S to the left and the right repetitiously while gradually shifting the sample S upwards similarly to the manner of raster scanning. When the electromotive stage 12 locates an appropriate cell, the imaging unit 18 captures a still image thereof.

At the image capturing, the observation apparatus receives area designating information from the input device 56. The area designating information designates an imaging area covering the appropriate cell. Every time the area designating information is supplied from the input device 56, the microscope controller 52 moves the sample S until the imaging area designated by the area designating information comes into the imaging region of the imaging unit 18 and temporarily stops the sample S at the position. The imaging controller 51 makes the imaging unit 18 capture the image of the sample S whenever the sample S is temporarily stopped to generate the observation image, and stores the observation image in the imaging information database 60.

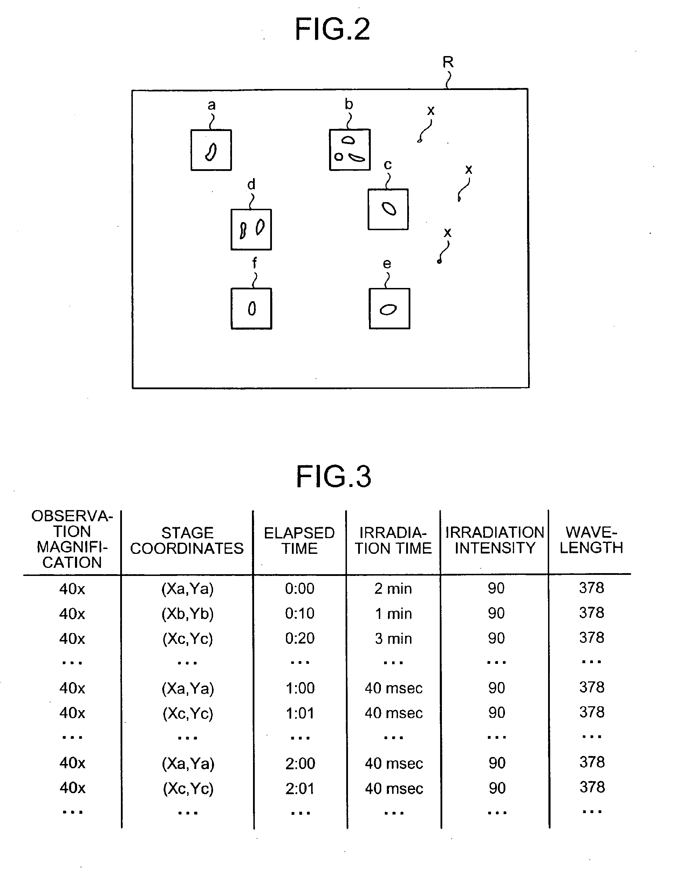

FIG. 2 shows imaging areas a to f as examples of the imaging area from which the observation image is captured within the imageable region R on the sample S. In FIG. 2, a subject in each of the imaging areas a to f has a size suitable for the observation magnification of the observation optical system based on the magnification of the currently selected objective lens 13. For example, an underdeveloped cell x within the sample S is excluded from the observation target. On capturing the observation image, the microscope controller 52 sequentially places each of the imaging areas a to f within the imaging region of the imaging unit 18, and stores the XY coordinates of the electromotive stage 12 at the time as the XY coordinates indicating the area position of each of the imaging areas a to f. Further, the microscope controller 52 stores the illumination condition applied to the sample S by the transmitting illumination optical system or the incident-light illumination optical system together with the observation magnification of the observation optical system in the imaging information database 60. The imaging controller 51 can alternatively store a setting condition of the imaging unit 18 at the time in the imaging information database 60. The storage unit 58 stores the XY coordinates indicating the area position of the imaging area, the illumination condition, and the observation magnification in association with each other for each of the observation images in the imaging information database 60.

When the imaging areas a to f including desirable observation targets are extracted from the imageable region R and stored in the above described manner, a screening (cell locating) operation finishes.

Thereafter, an imaging area including a particularly suitable cell is selected from the extracted imaging areas a to f. Generally, it is desirable to use an isolated cell for the observation of the living cell. Therefore, the imaging areas a, c, and e, for example, are selected as the observation targets of the time-lapse imaging. Though an image of the imaging area f also includes an isolated cell, the imaging area f is not selected as the observation target of the time-lapse imaging. The imaging information database 60 stores the XY coordinates of the electromotive stage 12 as indications of the area positions of the imaging areas a, c, and e, respectively, as described above. When the imaging areas a, c, and e are selected as observation targets for the time-lapse imaging, the XY coordinates corresponding to the imaging areas a, c, and e are stored as time-lapse imaging positions that indicate positions of observation targets for the time-lapse imaging.

Every time a previously set time interval for the time-lapse imaging passes, the microscope controller 52 drives the electromotive stage 12 via the stage driver 41 to sequentially place the imaging areas a, c, and e in the imaging region of the imaging unit 18, based on the XY coordinates of the electromotive stage 12 corresponding to the area positions of the imaging areas a, c, and e as stored in the imaging information database 60. Every time the imaging areas a, c, and e are sequentially placed within the imaging region, the imaging controller 51 gives an imaging command to the imaging unit 18. In response to the imaging command, the imaging unit 18 sequentially captures images of the imaging areas a, c, and e via the objective lens 13 to generate observation images thereof. The generated observation images are stored in the imaging information database 60. Further, the microscope controller 52 stores the illumination condition of one of the transmitting illumination optical system and the incident-light illumination optical system, and the observation magnification of the observation optical system in the imaging information database 60. The storage unit 58 associates the XY coordinates indicating the area position of the imaging area, the illumination condition, and the observation magnification with each other in the imaging information database 60 corresponding to each of the observation images obtained by the time-lapse imaging.

The illumination condition stored in the imaging information database 60 is, for example: elapsed time since the microscope controller 52 starts illumination of the sample S using one of the transmitting illumination optical system and the incident-light illumination optical system; irradiation time during which the transmitting illumination optical system or the incident-light illumination optical system illuminates the sample S every time the imaging unit 18 captures the image of the sample S; irradiation intensity of the illumination light irradiated on the sample S by the transmitting illumination optical system or the incident-light illumination optical system during the irradiation time; and wavelength of the illumination light. More specifically, the elapsed time corresponds to time passed since the screening operation is started until the microscope controller 52 turns on one of the incident-light illumination light source 22 and the transmitting illumination light source 31, and the irradiation time corresponds to time the incident-light illumination light source 22 or the transmitting illumination light source 31 remains on at each image-taking by the imaging unit 18.

FIG. 3 shows an example of the observation magnification, the stage coordinate as the area position, and the illumination condition, i.e., the elapsed time, the irradiation time, the irradiation intensity, and the wavelength stored in the imaging information database 60. Each piece of the information shown in FIG. 3 is stored in association with the observation image generated at the corresponding elapsed time. In practice, the coordinate values of the stage coordinates shown in FIG. 3 are stored as numerical value information.

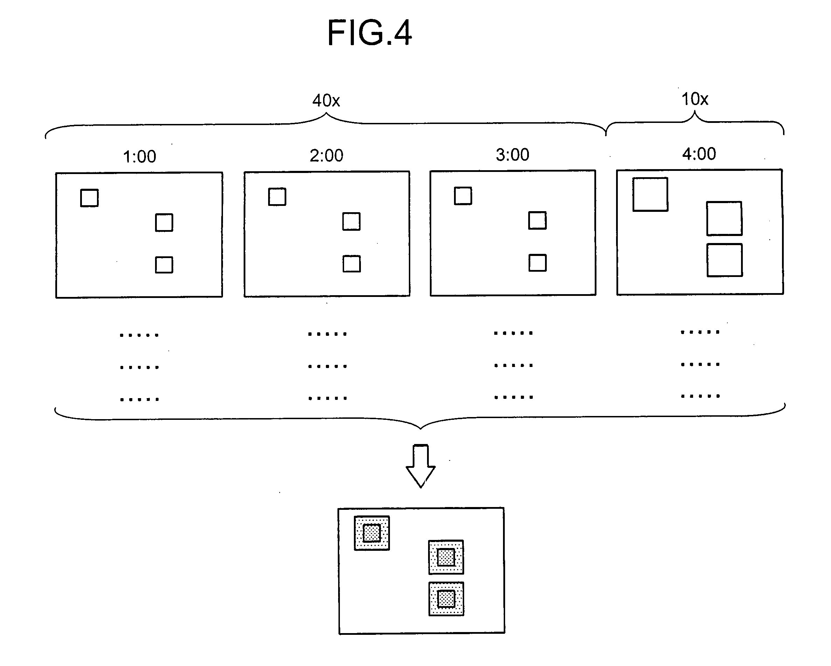

The time-lapse imaging is performed at high observation magnification (40×) every one hour starting from time 1:00, for example. An imaging at a low magnification (10x) is also performed once every four hours to check the influence on surrounding cells. FIG. 4 schematically shows how the time-lapse imaging is performed. An upper portion of FIG. 4 illustrates an area which is illuminated by the illumination light, i.e., the imaging region of the time-lapse imaging. The region illuminated by the illumination light corresponds to the "imaging area" described above. Further, the imaging regions at the time-lapse imaging operations are superposed one on another and the resulting image is shown in a lower portion of FIG. 4. Density of dotted patterns indicates the accumulated amount of illumination light.

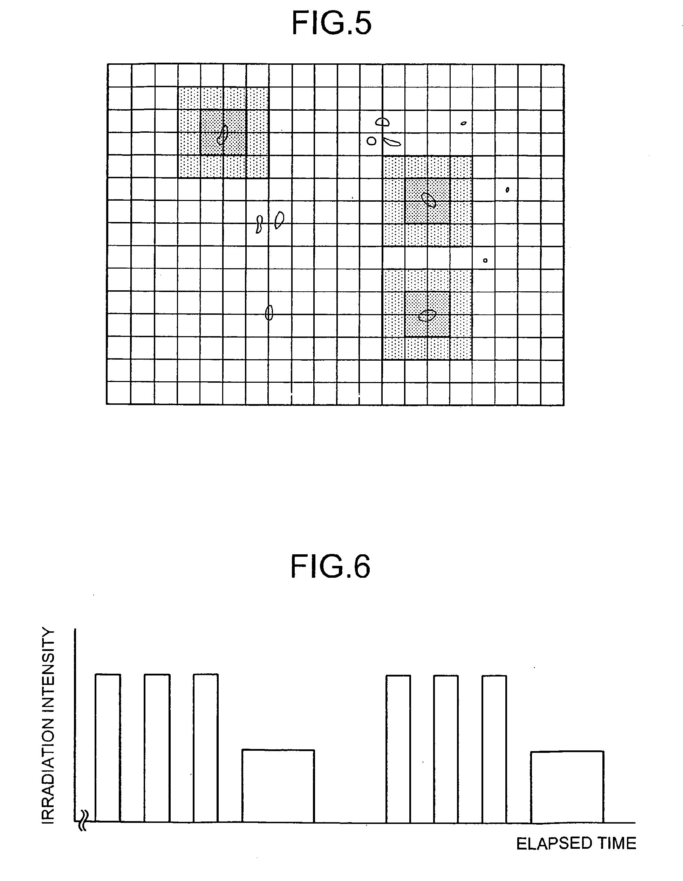

After the time-lapse imaging is finished, the imaging information management unit 54 calculates the accumulated amount of illumination light for each observation image based on the illumination condition stored in the imaging information database 60. The imaging information management unit 54 can display the information indicating the accumulated amount of illumination light superposed on the observation image on the monitor 55. Specifically, the imaging information management unit 54 divides an image area, which corresponds to the imageable region R, into two-dimensional blocks to display the image area as a coordinate table. The imaging information management unit 54 displays respective observation images corresponding to the imaging areas a, c, and e on the coordinate table. Further, the imaging information management unit 54 can convert the accumulated amount of illumination light irradiated on each of the imaging area corresponding to the observation image into display brightness, i.e., brightness of the image. Then, the imaging information management unit 54 can display the observation image on the monitor 55 in the obtained brightness. In FIG. 5, the display brightness is schematically shown by the density of the dotted pattern. Alternatively, the imaging information management unit 54 can display the accumulated amount of illumination light in a different manner on the monitor 55, for example, by using different colors for different amounts or by using different patterns for different amounts.

The operation information management unit 53 displays the GUI on the monitor 55. An operator performs a predetermined click manipulation with the mouse (for example, double clicks the mouse button) on a specific block or on a specific observation image, thereby inputting designating information to designate an area position. On receiving the designating information that designates the area position from the input device 56, the imaging information management unit 54 can display plural illumination conditions stored in the imaging information database 60 in a temporal order in association with the designated area position. Specifically, as shown in FIG. 6, for example, the imaging information management unit 54 can formulate a graph showing temporal changes in the irradiation intensity at the designated area position against the elapsed time and display the same on the monitor 55. The imaging information management unit 54 displays the graph while associating the graph with the observation image. For example, the imaging information management unit 54 displays the graph on the block or the observation image on which the click manipulation is performed, or display the graph in a popup window separately from the observation image. The imaging information management unit 54 can display the illumination condition other than the irradiation intensity. For example, the imaging information management unit 54 can display the illumination time, or other type of information.

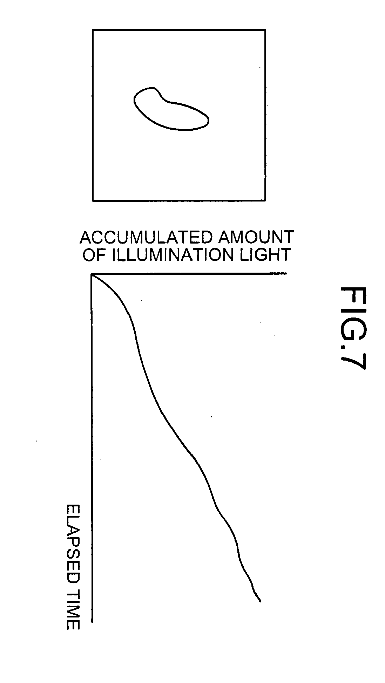

Further, when the operator similarly performs a predetermined click manipulation with the mouse (for example, selects a menu item by right clicking) on a specific block or a specific observation image to input designating information that designates an area position from the input device 56, the imaging information management unit 54 can calculate temporal changes in the accumulated amount of illumination light on the imaging area corresponding to the designated area position based on the plural illumination conditions which are stored in a temporal order in the imaging information database 60 in association with the designated area position, and display information indicating the temporal changes on the monitor 55. Specifically, as shown in FIG. 7, for example, the imaging information management unit 54 can formulate a graph indicating the temporal changes in the accumulated amount of illumination light on the designated area position against the elapsed time, and display the same on the monitor 55. For example, the imaging information management unit 54 displays the graph on the monitor 55 in association with a dynamic picture which is created from plural observation images (time-lapse images) obtained as a result of time-lapse imaging of the corresponding imaging area.

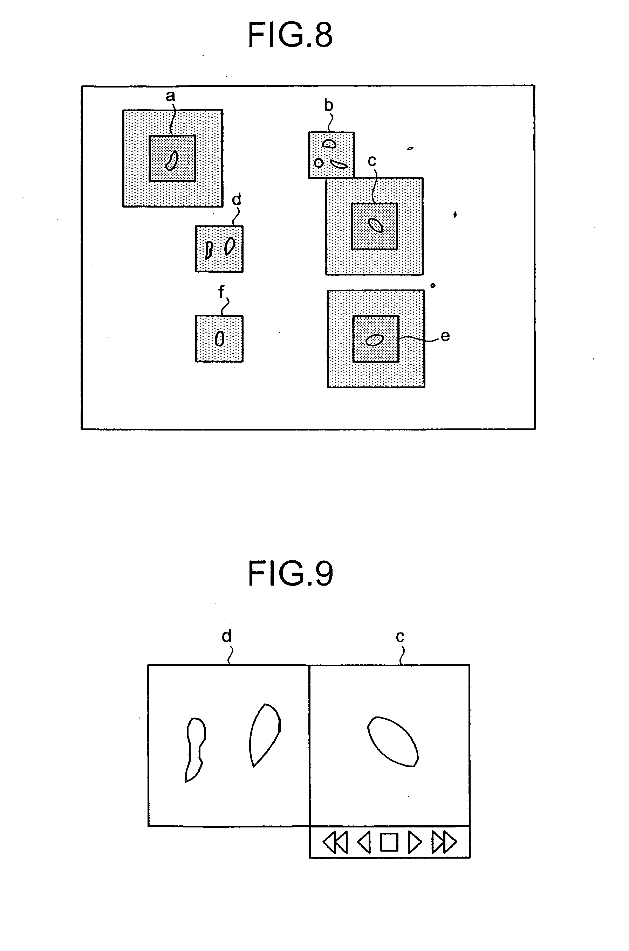

Further; when the operator performs a predetermined click manipulation with the mouse (for example, selects a menu item by right clicking) on the GUI displayed on the monitor 55 by the operation information management unit 53, the imaging information management unit 54 can, in response thereto, display the observation images corresponding to the imaging areas b, d, and f, for which the accumulated amount of illumination light is small, on the monitor 55 in addition to the time-lapse images corresponding to the imaging areas a, c, and e as shown in FIG. 8. Then, the operator or the like can determine whether the activity of the cell decreases due to phototoxic effect or due to culture condition. In the example of FIG. 8, the accumulated amount of illumination light is large for the imaging areas a, c, and e whose images are taken by time-lapse imaging, whereas the accumulated amount of illumination light is small for the imaging areas b, d, and f which are excluded from the target of time-lapse imaging. The difference in the accumulated amount of illumination light is schematically represented by difference in the density of dotted pattern.

Further, when the operator performs a predetermined click manipulation with the mouse (for example double clicks the mouse button) on the observation image displayed on the monitor 55, to input image selecting information to select plural observation images from the input device 56, the imaging information management unit 54, as shown in FIG. 9, can display the selected plural observation images in an aligned manner on the monitor 55. In FIG. 9, selected observation images correspond to the imaging area c for which the time-lapse imaging is performed and the imaging area d with the small accumulated amount of illumination light, and the selected observation images are displayed in an aligned manner. Thus, the observer can more clearly observe the cell with the large accumulated amount of illumination light and the cell with the small accumulated amount of illumination light in comparison with each other to easily determine the influence of the phototoxic effect and the like.

Further, as shown in FIG. 9, the operation information management unit 53 can display a button image as a GUI corresponding to the observation image obtained by time-lapse imaging of the imaging area. The button image allows the operator to give command to display the observation image frame by frame in a temporal order. Thus, simply by performing a predetermined click manipulation with the mouse (for example, by double clicking the mouse button) on the button image, the operator can observe observation images of a cell, on which a large accumulated amount of illumination light is irradiated, in a temporal order. Further, the operator can easily compare the above observation images with another observation image, for which an accumulated amount of illumination light is small, to check a declining activity of the cell. Here, various types of button images may be displayed to allow the operator to give command on frame-based display. For example, one button may display a previous image frame or a following image frame in response to each click of the mouse, another button may fast forward or fast rewind the images like a moving picture, and another button may stop the frame advance.

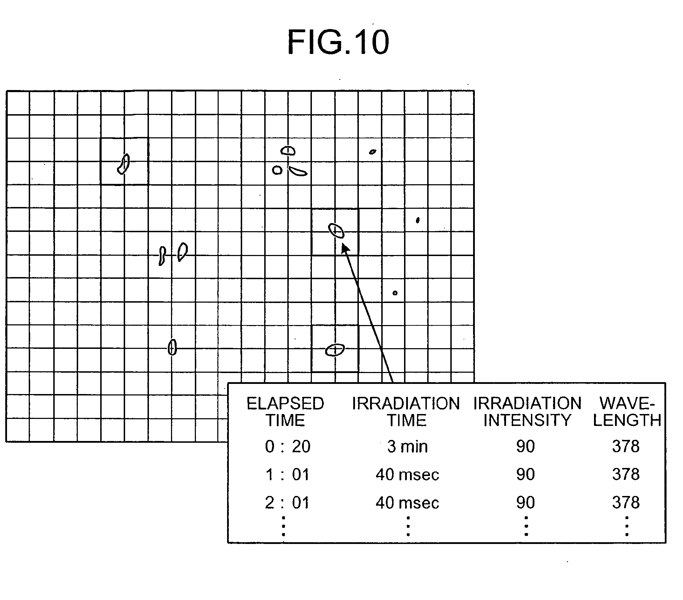

Further, when the operator performs a predetermined click manipulation with the mouse (for example, double clicks the mouse button) on a specific block or a specific observation image displayed on the monitor 55 to input designating information to designate an area position from the input device 56, the imaging information management unit 54, as shown in FIG. 10, can display plural illumination conditions that are stored in the imaging information database 60 in association with the designated area position on the monitor 55. The imaging information management unit 54 can display the illumination conditions as textual information in a temporal order. The textual information is displayed in association with the observation image. For example, the textual information is displayed on the block or the observation image on which the click manipulation is performed, or the textual information may be displayed in a popup window separately from the observation image. The textual information may include additional types of information, such as stage coordinates indicating the area position, and observation magnification. Alternatively, the display may be switched from one type of information to another and vice versa.

As can be seen from the foregoing, the observation apparatus according to the embodiment can display various types of information such as the illumination condition, which is stored in association with the observation image, in addition to the observation image obtained by time-lapse imaging. In brief, the observation apparatus of the embodiment can display various types of useful information for the evaluation of the observation image, for example, the illumination condition in association with the observation image.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An observation apparatus comprising:
an illuminating unit (13, 15, 22 to 24, 31 to 34) that illuminates a sample (S);
an imaging unit (18) that captures an image of the sample (S) to generate an observation image;
a storage unit (58) that stores the observation image in association with an illumination condition of the illuminating unit (13, 15, 22 to 24, 31 to 34) at generation of the observation image by the imaging unit (18);
an imaging controller (51) that controls the imaging unit (18) to capture the image of the sample (S) to generate the observation image and stores the observation image in the storage unit (58); and
an illumination controller (52) that controls the illuminating unit (13, 15, 22 to 24, 31 to 34) to illuminate the sample (S), and stores the illumination condition in the storage unit (58) every time the imaging unit (18) captures the image of the sample (S).

2. The observation apparatus according to claim 1, wherein
the illumination condition includes at least one of an elapsed time since the illuminating unit (13, 15, 22 to 24, 31 to 34) starts to illuminate the sample (S), an irradiation time during which the illuminating unit (13, 15, 22 to 24, 31 to 34) illuminates the sample (S) every time the imaging unit (18) captures the image of the sample (S), an irradiation intensity of an illumination light irradiated on the sample (S) by the illuminating unit (13, 15, 22 to 24, 31 to 34) during the irradiation time, and a wavelength of the illumination light.

3. The observation apparatus according to claim 1 or claim 2, further comprising:
a shifting unit (12, 41) that shifts the sample (S) relative to the imaging unit (18);
an information obtaining unit (56) that obtains area designating information which designates an imaging area on the sample (S) for the imaging unit (18);
a shift controller (52) that controls the shifting unit (12, 41) to shift the sample (S) along a predetermined imaging path, temporarily stop the sample (S) every time the information obtaining unit (56) obtains the area designating information and when the imaging area designated by the area designating information is shifted inside an imaging region of the imaging unit (18), and stores the storage unit (58) an area position which indicates a position of the imaging area in the storage unit, wherein
the imaging controller (51) controls the imaging unit (18) to capture the image of the sample (S) to generate the observation image, and stores the observation image in the storage unit (58), every time the shifting unit (12,41) temporarily stops the sample (S) according to the area designating information,
the storage unit (58) further stores the observation image in association with the area position of the imaging area stored.

4. The observation apparatus according to claim 3, wherein
the shift controller (52) controls the shifting unit (12, 41) to shift the sample (S) at predetermine time intervals and arrange the imaging area corresponding to the area position previously stored in the storage unit (58) within the imaging region, and
the imaging controller (51) controls the imaging unit (18) to capture the image of the sample (S) to generate the observation image and stores the observation image in the storage unit (58) every time the shifting unit (12,41) arranges the imaging area within the imaging region according to the predetermined time interval.

5. The observation apparatus according to claim 4, wherein
the imaging area includes a plurality of imaging areas, and
the shift controller (52) controls the shifting unit (12, 41) to shift the sample (S) at the time intervals to sequentially arrange the imaging areas within the imaging region.

6. The observation apparatus according to any one of claims 1 to 5, further comprising:
an observation optical system (13, 15) that forms an observation image of the sample (S);
a power changing mechanism (14, 15, 42, 44) that changes an observation magnification of the observation optical system (13, 15) for the observation image; and
a power change controller (52) that controls the power changing mechanism (14, 15, 42, 44) to change the observation magnification and stores the observation magnification in the storage unit (58), wherein
the imaging unit (18) captures the image of the sample (S) via the observation image,
the power change controller (52) stores the observation magnification in the storage unit (58) every time the imaging unit (18) captures the image of the sample (S),
the storage unit (58) stores the observation image and the observation magnification recorded in the observation image in association with each other.

7. The observation apparatus according to any one of claims 1 to 6, further comprising:
a display unit (55) that displays the observation image, and
a display controller (54) that controls the display unit (55) to display the illumination condition related with the observation image in association with the observation image stored in the storage unit (58).

8. The observation apparatus according to any one of claims 3 to 6, further comprising:
a display unit (55) that displays the observation image,
a display controller (54) that controls the display unit (55) to display a plurality of illumination conditions related with the area position associated with the observation image in a temporal order in association with the observation image stored in the storage unit (58).

9. The observation apparatus according to claim 8, wherein
the display controller (54) calculates an accumulated amount of illumination light irradiated on the imaging area located at the area position associated with the observation image stored in the storage unit (58), based on the plurality of illumination conditions which are taken in a temporal order for the area position, and controls the display unit (55) to display information indicating the accumulated amount of illumination light corresponding to the observation image.

10. The observation apparatus according to claim 9, wherein
the display controller (54) controls the display unit (55) to display the information indicating the accumulated amount of illumination light by superposing the information on the observation image, the information including at least one of brightness, color, and pattern according to the accumulated amount of illumination light.

11. The observation apparatus according to claim 8, wherein
the display controller (54) calculates a temporal change in the accumulated amount of illumination light irradiated on the imaging area at the area position associated with the observation image stored in the storage unit (58), based on the plurality of illumination conditions which are taken in a temporal order for the area position, and controls the display unit (55) to display information indicating the temporal change in the accumulated amount of illumination light in association with the observation image.

12. The observation apparatus according to claim 8, further comprising
an information obtaining unit (56) that obtains image designating information which indicates the observation image, wherein
the display controller (54) controls the display unit (55) to display a plurality of the observation images designated by the image designating information in an aligned manner.

13. The observation apparatus according to any one of claims 8 to 11, further comprising
an information obtaining unit (56) that obtains position designating information which indicates the area position, wherein
the display controller (54) controls the display unit (55) to display the observation image stored in the storage unit (58), and to display the plurality of the illumination conditions, which are taken in a temporal order for the area position indicated by the image designating information, in a popup window, every time the information obtaining unit (56) obtains the image designating information for the observation image.
